# EUROPÄISCHE PATENTSCHRIFT

(11) **EP 2 791 594 B1**
(45) Veröffentlichungstag und Bekanntmachung des Hinweises auf die Patenterteilung: **27.07.2016**
(21) Anmeldenummer: 12805667.8
(22) Anmeldetag: 10.12.2012
(51) Int. Cl.: F24J 2/10, F24J 2/16, F24J 2/46

(54) **RECEIVERSYSTEM FÜR EINE FRESNEL-SOLARANLAGE**
RECEIVER SYSTEM FOR A FRESNEL SOLAR PLANT
SYSTÈME RÉCEPTEUR POUR INSTALLATION SOLAIRE FRESNEL

(30) Priorität: 16.12.2011 DE 102011088830
(43) Veröffentlichungstag der Anmeldung: 22.10.2014
(73) Patentinhaber: Schott Solar AG, 55122 Mainz (DE)
(72) Erfinder: SAUERBORN, Andreas, 35260 Stadtallendorf (DE); GNÄDIG, Tim, 95666 Mitterteich (DE); KUCKELKORN, Thomas, 07743 Jena (DE); BRENGELMANN, Tim, 80687 München (DE)
(74) Vertreter: Mehler Achler
(86) Internationale Anmeldenummer: PCT/EP2012/074906
(87) Internationale Veröffentlichungsnummer: WO 2013/087556

(56) Entgegenhaltungen:
- WO-A1-99/42765
- WO-A1-2005/078360
- WO-A1-2010/100293
- WO-A2-02/12799
- WO-A2-2009/029275
- DE-A1-102010 014 787

## Beschreibung

Die Erfindung betrifft ein Receiversystem für eine Fresnel-Solaranlage mit einem eine Längsrichtung definierenden Absorberrohr, einer zur Längsrichtung parallelen Spiegelanordnung als Sekundärkonzentrator, die quer dazu ein spiegelsymmetrisches Kurvenprofil mit wenigstens einem oben liegenden Scheitelpunkt zur Konzentration von Lichtstrahlen auf das Absorberrohr aufweist.

Das gattungsgemäße Receiversystem ist Teil eines Solarkraftwerks, welches weiterhin einen Primärkonzentrator in Form eines Feldes bodennah montierter paralleler Spiegelreihen aufweist, welche Sonnenstrahlen auf das Receiversystem konzentrieren, die von dessen Spiegelanordnung nochmals konzentriert auf das Absorberrohr projiziert werden. Das Receiversystem befindet sich zu diesem Zweck in einer Höhe von mehreren Metern über der Primärkonzentrator-Spiegelanordnung, in der er mittels tragender Komponenten justiert ist. Je nach Kollektordesign sind solche Anlagen mit 4 m bis 30 m Höhe bekannt. Der Sekundärkonzentrator weist ein geeignetes Kurvenprofil auf und projiziert die Strahlung nach unten auf das in möglichst geringer Entfernung darunter angeordnete Absorberrohr. Das Absorberrohr ist von einem Wärmeträgerfluid durchströmt, welches durch die konzentrierte Lichtstrahlung auf mehrere 100° C erwärmt wird. Die Wärme kann beispielsweise zur Stromerzeugung oder als Prozesswärme verwendet werden.

Derartige Fresnel-Solaranlagen befinden sich seit mehreren Jahren in einer beschleunigten Entwicklungsphase. Jüngere Dokumente zu diesem Thema sind beispielsweise der Aufsatz "Supernova - Construction, Control & Performance of Steam super heating linear Fresnel-Collector", Gabriel Morin et al., Solar Paces Conference 2011, Book of Abstracts und die Offenlegungsschriften WO 2010/100293 A1 und WO 99/42765 A1.

Für die Erreichung eines hohen Wirkungsgrades ist neben der Oberflächengüte der optischen Bestandteile des Spiegels und des Absorberrohres, die Gegenstand zahlreicher Erfindungen sind, unter anderem die optisch geometrische Konfiguration der Spiegel und des Absorberrohres eine grundlegende Voraussetzung. Der vorliegende Erfindungsgegenstand befasst sich deshalb insbesondere mit der Justage der Spiegelanordnung und des Receiverrohres, der in der Vergangenheit noch wenig Beachtung geschenkt wurde.

Das Receiversystem ist über einen Tageszyklus ist in Teilen sehr hohen und insgesamt sehr unterschiedlichen Temperaturschwankungen und Umwelteinflüssen ausgesetzt.

Ziel der Erfindung ist es, die Solaranlage durch eine verbesserte Konstruktion weniger empfindlich für Temperaturschwankungen und Umwelteinflüsse zu gestalten und somit schfießlich auch deren Wirkungsgrad und Lebendauer zu erhöhen.

Die Aufgabe wird gelöst durch ein Receiversystem für eine Fresnel-Solaranlage mit den Merkmalen des Patentanspruchs 1.

Bei einem Receiversystem der eingangs genannten Art weist die Spiegelanordnung im Bereich des Scheitelpunktes angeordnete Lüftungsöffnungen auf.

Die Lüftungsöffnungen bewirken generell einen Luftaustausch so dass sich die Spiegelanordnung nicht unnötig erwärmt. Dabei ist berücksichtigt, dass sich gerade dort, wo die höchste Strahlungsintensität auf die Spiegeloberfläche auftrifft keine erwärmte Luft stauen kann und dass sich kein oben liegendes Totvolumen ausbildet. "im Bereich der Scheitelpunkte" ist hier so zu verstehen, dass sich die Luftspalte auch ein wenig unterhalb des Scheitelpunktes des Kurvenprofils befinden können. Als bevorzugte Lage der Luftspalte wird ein Bereich von 10% der Gesamthöhe des Kurvenprofils unterhalb des obenliegenden Scheitelpunktes angegeben.

Analog gilt, wenn das Kurvenprofil der Spiegelanordnung zwei obenliegende Scheitelpunkte aufweist, dass die Lüftungsöffnungen dann jeweils im Bereich beider Scheitelpunkte angeordnet sind.

Gemäß einer vorteilhaften Ausgestaltung der Erfindung weist das Receiversystem ein Receiverrohr, bestehend aus dem Absorberrohr und einem wenigstens abschnittsweise um das Absorberrohr angeordneten Hüllrohr auf.

Es handelt sich dann um einen Vakuumreceiver, bei dem der Zwischenraum zwischen Absorberrohr und Receiverrohr zur thermischen Isolation und zum Schutz der Oberflächen des Absorberrohres evakuiert ist. Da das Absorberrohr und das dieses umgebende Hüllrohr unterschiedlichen thermischen Bedingungen ausgesetzt sind und da das Absorberrohr aus Metall, das Hüllrohr aber aus Glas bestehen, dehnen sich die beiden Rohre in unterschiedlichem Maße aus. Das Hüllrohr ist deshalb segmentiert und zwischen jedem Hüllrohrsegment und dem Absorberrohr sind in bekannter Weise Ausgleichselemente, regelmäßig in Form von Faltenbalgen, vorgesehen, die das Hüllrohr in Ausgleichrichtung beweglich aber ansonsten möglichst steif auf dem Absorberrohr fixieren. Die Ausgleichselemente zwischen den Hüllrohrsegmenten und dem Absorberrohr dienen nur zur Kompensation einer relativen Bewegung zwischen beiden. Eine solche Vakuumreceiveranordnung ist beispielsweise in der Patentanmeldung DE102 31 467 A1 beschrieben.

Eine vorteilhafte Weiterbildung der Erfindung sieht vor, dass die Spiegelanordnung in Längsrichtung getrennte erste und zweite Spiegelelemente mit einer dazwischen liegenden Lücke aufweist.

Bei der in wenigstens zwei Spiegelelemente getrennten Spiegelanordnung sind die Lüftungsöffnungen in Form der Lücke ausgestaltet.

Um Strahlungsverluste so gut wie möglich zu vermeiden, weist die Spiegelanordnung einen Spiegelabschnitt auf, der den Spalt zwischen den ersten und zweiten Spiegelelementen zumindest teilweise optisch schließt.

"Zumindest teilweise optisch schließt" ist hierbei so zu verstehen, das ungeachtet der konkreten Ausgestaltung des Spiegelabschnittes vorzugsweise jeweils ein Luftspalt zwischen dem ersten Spiegelelement und dem Spiegelabschnitt und zwischen dem zweiten Spiegelelement und dem Spiegelabschnitt vorgesehen ist, wobei in dieser Ausführungsvariante der Erfindung die beiden Luftspalte die Lüftungsöffnungen bilden.

Vorzugsweise weist die Spiegelanordnung jeweils ein dem ersten und zweiten Spiegelelement zugeordnetes erstes und zweites Profilelement auf, das das zugeordnete Spiegelelement auf dessen dem Receiver- bzw. Absorberrohr abgewandten Seite einhaust.

Eine Einhausung ist bislang nur für das gesamte Receiversystem bekannt, innerhalb derer also sowohl die Spiegelanordnung, als auch das Receiverrohr und tragende Teile angeordnet sind. Zweck der Einhausung ist es, das Receiversystem vor Umwelteinflüssen und Staub zu schützen. Denselben Zweck erfüllen auch die den einzelnen Spiegelelementen zugeordneten Profilelemente, jedoch mit dem Vorteil, dass diese einen individuellen Schutz der einzelnen Spiegelelemente bieten und deshalb je nach Anforderung mit diesen mitbewegt werden können und eine bessere Belüftung der optischen Komponenten (Spiegelanordnung und Absorber- bzw. Receiverrohr) und der tragenden Komponenten ermöglichen. Dies gilt insbesondere dann, wenn vorzugsweise jeweils zwischen dem Spiegelelement und dem zugeordneten Profilelement Lüftungsöffnungen vorgesehen sind.

Die ersten und zweiten Spiegelelemente werden vorteilhafterweise jeweils an den zugeordneten ersten und zweiten Profilelementen wenigstens einseitig mittels Ausgleichsmitteln fixiert, die unterschiedliche Ausdehnungen der Spiegelelemente und der zugeordneten Profilelemente in Längsrichtung erlauben. Dadurch wird ein Dehnungsausgleich für die unterschiedlich erhitzten Spiegelelemente und Profilelemente geschaffen.

In einer vorteilhaften, weil kostengünstigen Ausführungsvariante sind die ersten und zweiten Profilelemente L-förmig ausgestaltet.

Der Spiegelabschnitt ist gemäß einer ersten Alternative bevorzugt als drittes Spiegelelement ausgebildet und die Spiegelanordnung weist ein dem dritten Spiegelelement zugeordnetes, vorzugsweise U-förmiges drittes Profilelement auf, das das dritte Spiegelelement auf dessen dem Absorberrohr abgewandten Seite einhaust.

Da auch das dritte Spiegelelement sowie das zugeordnete dritte Profilelement ihrerseits unterschiedlichen Temperaturen und deshalb unterschiedlichen Längenausdehnungen ausgesetzt sind, hat es sich als vorteilhaft erwiesen, das dritte Spiegelelement an dem zugeordneten dritten Profilelement wenigstens einseitig mittels Ausgleichsmitteln zu fixieren, die unterschiedliche Ausdehnungen des dritten Spiegelelements und des zugeordneten Profilelements in Längsrichtung erlauben.

Gemäß einer zweiten Alternative ist der Spiegelabschnitt als verspiegelte Oberfläche des Hüllrohres ausgebildet.

Eine solche Variante ist dem Grunde nach aus der Offenlegungsschrift WO 2010/100293 A1 bekannt, dient dort aber einem anderen Zweck, nämlich die Spiegelanordnung des Receiversystems möglichst dicht an das Absorberrohr heranzubringen, um Verluststrahlung, die andernfalls den Zwischenraum zwischen dem Absorberrohr und dem Spiegel ungenutzt passieren würde, zu nutzen.

Besonders bevorzugt weist das Receiversystem ein Traggestell für das Absorber- bzw. Receiverrohr und die Spiegelanordnung auf, an dem unabhängig voneinander eine erste Aufhängung zum Halten des Absorber- bzw. Receiverrohres und eine zweite Aufhängung zum Halten der Spiegelanordnung oder zumindest von Teilen der Spiegelanordnung montiert sind, wobei die erste Aufhängung erste Ausgleichsmittel und die zweite Aufhängung zweite Ausgleichsmittel aufweisen und die ersten und zweiten Ausgleichsmittel unterschiedliche Ausdehnungen des Absorberrohres und der Spiegelanordnung in Längsrichtung erlauben.

Wenn hierin von "zumindest Teilen der Spiegelanordnung" die Rede ist, dann sind damit wenigstens die beiden außenliegenden ersten und zweiten Spiegelelemente und, soweit vorhanden, deren zugeordnete Profilelemente gemeint.

Diesem Erfindungsaspekt liegt die Erkenntnis zugrunde, dass das Absorberrohr einerseits und die Spiegelanordnung andererseits unterschiedlichen Temperaturschwankungen unterliegen. Femer sind die beiden Komponenten aus unterschiedlichen Materialien gefertigt, sodass sie sich im Betrieb in unterschiedlicher Weise ausdehnen. Da die Solaranlage typischerweise mehrere 100 Meter lang ist, kann die Längenausdehnung des am stärksten erhitzten Absorberrohrs bis zu einige Meter betragen. Aber auch die Spiegel dehnen sich durch die Erwärmung in nennenswertem Umfang aus, der jedoch von der Ausdehnung des Absorberrohrs verschieden ist. Weiterhin ist zu berücksichtigen, dass sich das Absorberrohr durchgängig über die gesamte Länge der Solaranlage erstreckt, während die Spiegelanordnung über die gesamte Länge in einzelne Segmente unterteilt ist.

Das erste Ausgleichsmittel und das zweite Ausgleichsmittel bieten jeweils einen Freiheitsgrad im Wesentlichen in Längsrichtung, so dass eine unabhängige Ausdehnung des Absorberrohres und der Spiegelanordnung kompensiert werden kann. Auf diese Weise werden insbesondere bei Verwendung von Aluminiumspiegeln Verformungen der Spiegelflächen wirksam vermieden.

Wie anhand von Ausführungsbeispielen weiter unten klar werden wird, können die Freiheitsgrade neben einer linearen Ausgleichsbewegung, auch eine kurvige, insbesondere eine kreisförmige Ausgleichsbewegung, beipielsweise durch eine Drehgelenkverbindung, erlauben, wobei es aber nur auf den in Längsrichtung verlaufende Tangentialanteil der Ausgleichsbewegung ankommt. In diesem Sinne wird hierin von einem Freiheitsgrad "im Wesentlichen in Längsrichtung" gesprochen.

Das Traggestell weist vorzugsweise einen parallel zum Absorber- oder Receiverrohr und zur Spiegelanordnung verlaufenden Längsträger auf, an dem die erste Aufhängung montiert ist.

Besonders bevorzugt ist der Längsträger über dem Absorber- oder Receiverrohr und der Spiegelanordnung angeordnet.

Hierzu wird die erste Aufhängung vom Längsträger bevorzugt durch die Lücke zwischen den ersten und zweiten Spiegeielementen zum Absorberrohr geführt. Auf diese Weise kann die erste Aufhängung zum Halten des Absorber bzw. des Receiverrohres eine uneingeschränkte Relativbewegung gegenüber der Spiegelanordnung in Längsrichtung ausführen, ohne mit der Spiegelanordnung zu kollidieren.

Besonders bevorzugt weist die zweite Aufhängung als zweites Ausgleichsmittel ein erstes Gelenk auf, welches das Traggestell auf der einen Seite mit der Spiegelanordnung auf der anderen Seite verbindet und einen Freiheitsgrad in Längsrichtung definiert. Als Gelenk wird hierin grundsätzlich die bewegliche Verbindung zweier relativ starrer Körper verstanden.

Das erste Gelenk ist bevorzugt als Festkörpergelenk ausgebildet. In dieser Ausführungsform kann das Gelenk durch einen monolithischen, jedoch durch seinen flachen Querschnitt flexiblen Festkörper gebildet werden. Diese Form des Gelenks hat den Vorteil, dass es keine Reibung zweier relativ zueinander beweglicher Gelenkteile gibt und dass die Aufhängung deshalb bei geringen Auslenkungen weniger verschleiß- und wartungsanfällig ist.

Die erste Aufhängung weist als erste Ausgleichmittel bevorzugt eine Wälz- oder Gleitlageranordnung, insbesondere in Form einer Laufkatze, auf, die entlang des Längsträgers verfahrbar angeordnet ist.

Diese Form des Dehnungsausgleichs ist insbesondere aufgrund der erheblichen Längenausdehnung des Absorberrohres zweckmäßig.

Die ersten und zweiten Profilelemente sind vorzugsweise an der zweiten Aufhängung und das dritte Profilelement bevorzugt an der ersten Aufhängung befestigt.

Auf diese Weise bildet das Absorber- oder Receiverrohr zusammen mit der ersten Aufhängung und dem zentralen dritten Spiegelelement mit Profilelement eine zusammenhängende und von den ersten und zweiten Spiegelelementen mit deren Profilelementen unabhängige Einheit, deren Dehnung als Ausgleich von dem der ersten und zweiten Spiegelelemente vollständig entkoppelt ist.

In einer besonders bevorzugten Ausgestaltung weist die zweite Aufhängung ein zweites Gelenk auf, welches das Traggestell auf der einen Seite mit der Spiegelanordnung oder mit Teilen der Spiegelanordnung auf der anderen Seite verbindet und einen Freiheitsgrad quer zur Längsrichtung definiert.

Ein solches Gelenk dient dazu, dass die Spiegelanordnung oder Teile davon in seitlicher und/oder vertikaler Richtung relativ zu dem Absorber- oder Receiverrohr bewegbar, aber über das Traggestell mit diesem unverlierbar verbunden ist. Sie ermöglicht, dass die Spiegelanordnung zu Wartungszwecken des Absorber- oder Receiverrohrs auf einfache und definierte Weise von diesem weg und wieder in die exakte Sollposition zurück bewegt werden kann.

Insbesondere ist das zweite Gelenk vorteilhafterweise ein Drehgelenk zum Wegschwenken der Spiegelanordnung oder zumindest von Teilen der Spiegelanordnung.

Gemäß einer weiteren vorteilhaften Ausgestaltung ist das Hüllrohr zumindest auf einen mittleren Längenabschnitt exzentrisch um das Absorberrohr angeordnet.

Eine solche Ausgestaltung ist dem Grunde nach ebenfalls aus der Offenlegungsschrift WO 2010/100293 A1 bekannt. Die exzentrische Anordnung dient hier wie auch dort einer höheren Ausbeute der reflektierten Lichtstrahlung bzw. eines geringeren Verlustes den Zwischenraum zwischen dem Absorberrohr und der Spiegelanordnung passierender Lichtstrahlen.

Alternativ oder zusätzlich hierzu ist das Hüllrohr vorzugsweise zumindest auf einen mittleren Längenabschnitt verjüngt. Auch diese Maßnahme dient einer Verringerung des Spaltes zwischen dem Absorberrohr und dem Hüllrohr, sodass die Spiegelanordnung in einem geringen Abstand zu dem Absorberrohr angeordnet werden kann.

Weitere Merkmale und Vorteile der Erfindung werden anhand von Ausführungsbeispielen erläutert, die in den nachfolgenden beschriebenen Figuren dargestellt sind. Es zeigen:
- Figur 1: eine Schemadarstellung der der Erfindung zugrundeliegenden Ausgangssituation;
- Figur 2: eine dreidimensionale Darstellung des Traggestells des erfindungsgemäßen Receiversystems mit erster und zweiter Aufhängung;
- Figur 3: eine stirnseitige Ansicht auf ein Ausführungsbeispiel des erfindungsgemäßen Receiversystems;
- Figur 4: eine isolierte Darstellung des Traggestells des erfindungsgemäßen Receiversystems in der stirnseitigen Ansicht;
- Figur 5: eine Seitenansicht auf das Detail des Traggestells zur Illustration der zweiten Aufhängung zum Halten der Spiegelanordnung;
- Figur 6: eine Seitenansicht auf ein Segment des Receiversystems zur Illustration der Spiegelanordnung;
- Figur 7: eine Seitenansicht auf das Detail des Recieverrohres nebst erster Aufhängung des Receiversystems;
- Figur 8: eine perspektivische Darstellung des Details der ersten Aufhängung;
- Figur 9: ein schematischer Querschnitt durch das Receiversystem in einer ersten Ausführungsform zur Illustration einer geteilten Spiegelanordnung;
- Figur 10: ein schematischer Querschnitt durch eine zweite Ausführungsform des Receiversystems zur Illustration einer alternativen Teilung der Spiegelanordnung;
- Figur 11: ein schematischer Querschnitt durch das Receiversystem ähnlich der Ausführungsform gemäß Figur 9 zur Illustration einer Belüftung der Spiegelelemente;
- Figur 12A: eine Seitenansicht einer ersten Ausführungsform des Receiverrohres mit exzentrischer Anordnung des Hüllrohres; und
- Figur 12B: eine Seitenansicht auf eine zweite Ausführungsform des Recieverrohres mit verjüngtem Hüllrohr.

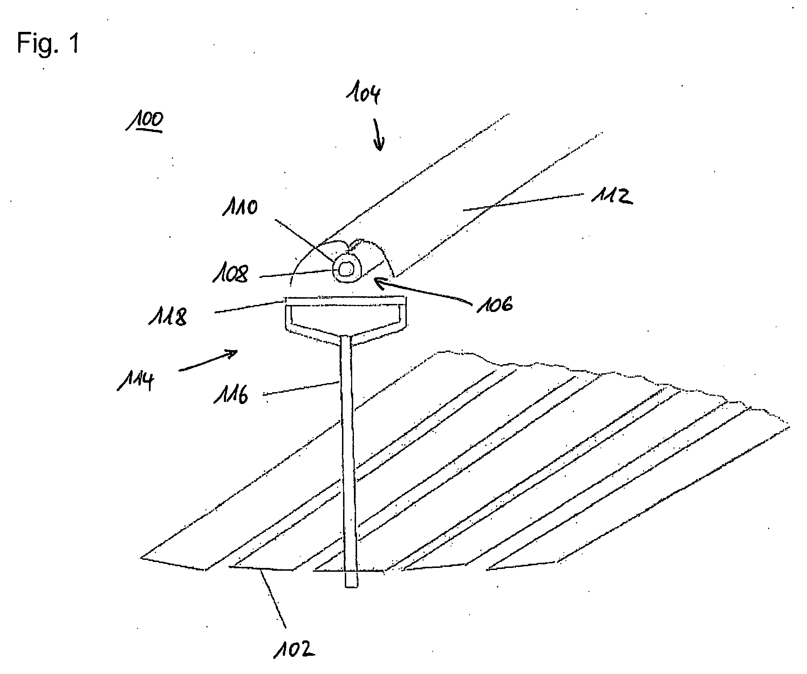

In Figur 1 ist die Ausgangssituation zur Erläuterung des der Erfindung zugrundeliegenden Problems anhand einer schematischen Darstellung einer Fresnel-Solaranlage 100 skizziert. Diese weist ein Feld parallel ausgerichteter Primärkonzentratorspiegel 102 auf, welche in Bodennähe montiert und auf eine Receiversystem 104 dergestalt ausgerichtet sind, dass die auf die Primärkonzentratorspiegel 102 auftreffenden Sonnenstrahlen von diesen im wesentlichen aufwärts reflektiert und nach Möglichkeit verlustfrei in den Erfassungsbereich des Receiversystems 04 gelangen. Das Receiversystem 104 weist im wesentlichen drei funktionale Komponenten auf, nämlich ein Receiverrohr 106, welches seinerseits aus einem Absorberrohr 108 und einem in Längsrichtung wenigstens abschnittsweise um das Absorberrohr 108 angeordneten Hüllrohr 110 besteht, eine zur Längsrichtung parallele Spiegelanordnung 112 als Sekundärkonzentrator zur Konzentration der von dem Primärkonzentrator reflektierten Lichtstrahlen auf das Absorberrohr 108 und ein Traggestell 114, welches hier stark vereinfacht dargestellt ist und einen Stützpfosten 116 und einen Querträger 118 umfasst.

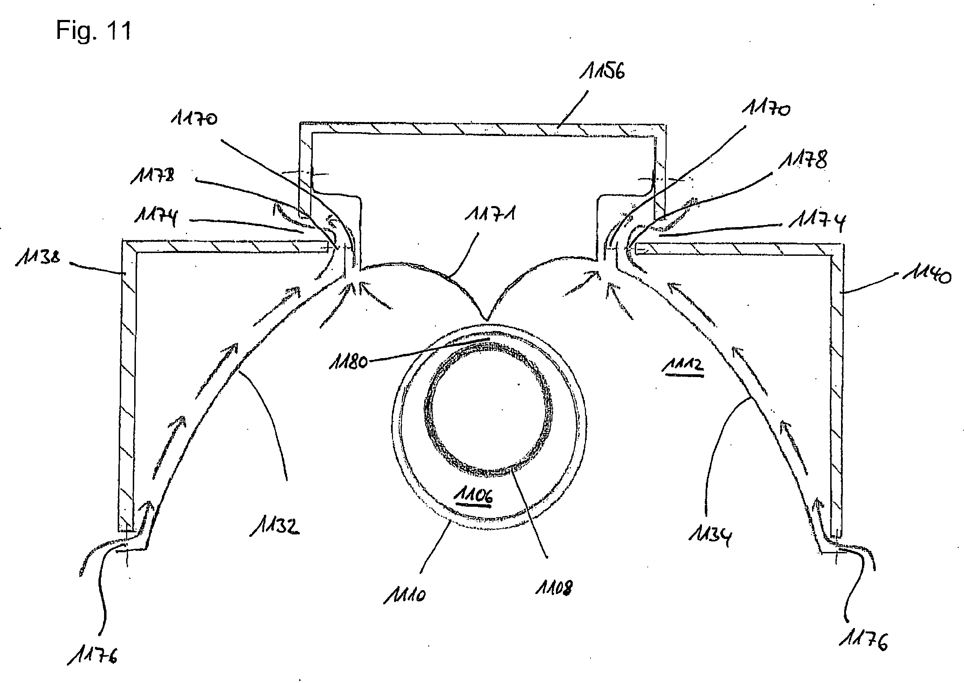

Die Erfindung beschäftigt sich hiervon ausgehend mit der Frage, wie eine durch Erwärmung verursachte Verformung der optischen Komponenten, insbesondere der Spiegelanordnung, möglichst effizient und kostengünstig vermindert oder kompensiert werden kann. Dazu gehört erfindungsgemäß die anhand von Figur 11 erläuterte Belüftung der Spiegelanordnung und zum anderen eine Befestigung, die hinreichende Freiheitsgrade zur Kompensation unterschiedlicher Längenausdehnungen der einzelnen Komponenten bereitstellt. Bislang werden sowohl das Receiverrohr als auch die Spiegelanordnung in einem gemeinsamen Gehäuse untergebracht, welches wie ein Dach über der Spiegelanordnung angeordnet ist und diese vor Witterungseinflüssen schützt. Innerhalb des Gehäuses greifen von oben gemeinsame Halter an dem Receiverrohr und der Spiegelanordnung an und fixieren diese. Auch diese Halter erlauben zwar eine Ausgleichsbewegung in Längsrichtung, jedoch nur eine gemeinsame für das Receiverrohr und die Spiegelanordnung. Um den stark unterschiedlichen Längenausdehnungen gerecht zu werden, werden die Spiegel der Spiegelanordnung nur einseitig fixiert und auf der anderen Seite nur geführt. Jedoch hat das nicht zu zuverlässigen Bewegungen der Komponenten und regelmäßig zu einer optischen Dejustage geführt.

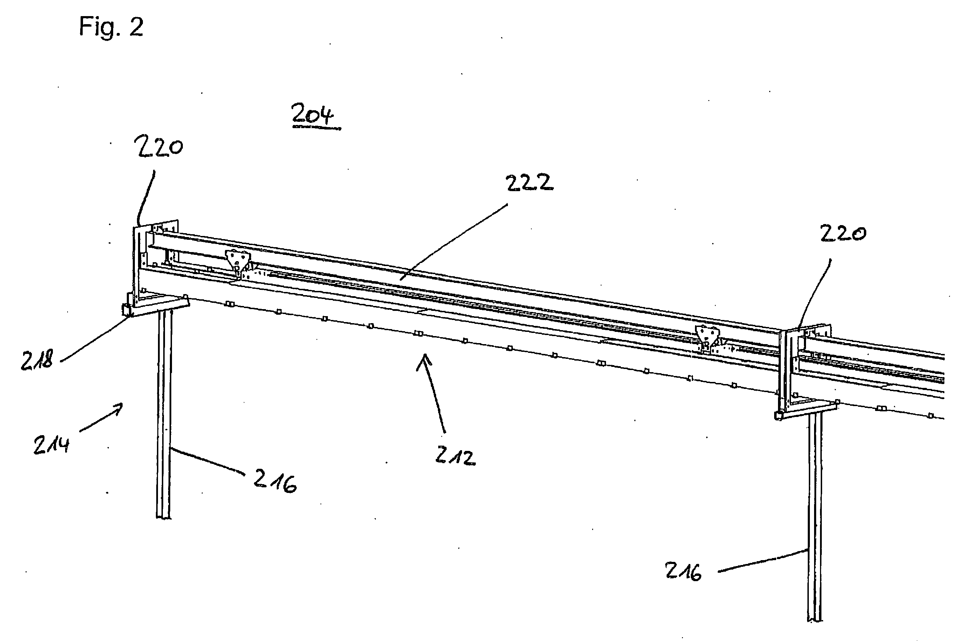

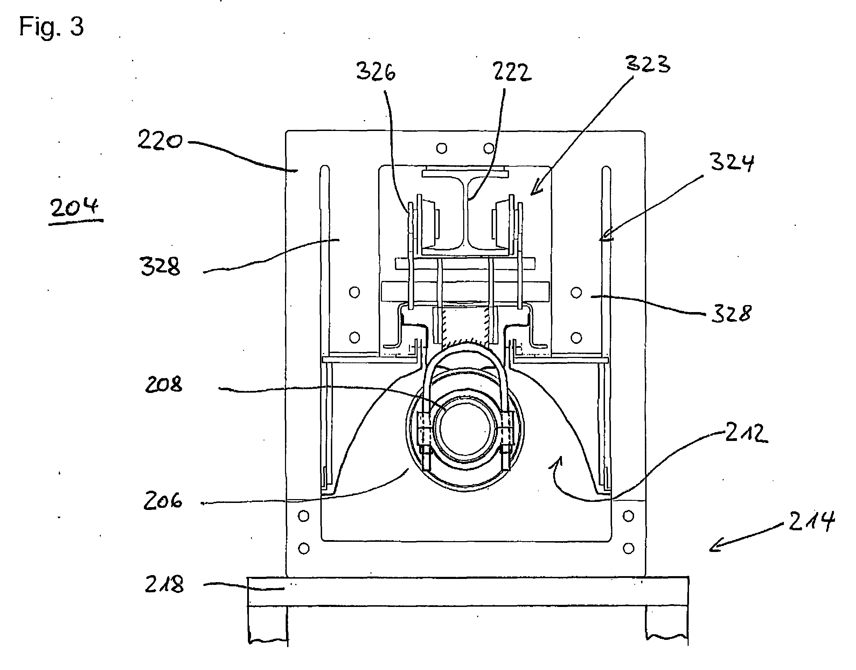

Zunächst wird anhand der Figuren 2 und 3 näher erläutert, wie die Befestigung der Spiegelanordnung oder von Teilen derselben und die Befestigung des Absorber- bzw. Receiverrohrs vorteilhaft ausgestaltet werden kann, wobei in Figur 2 wesentliche Teile des Receiversystems zugunsten der Übersichtlichkeit weggelassen sind, welche unter Bezugnahme auf den Querschnitt in Figur 3 erläutert werden.

Das Receiversystem 204 weist ein Receiverrohr 206 der vorstehend beschriebenen Art, eine Spiegelanordnung 212 und ebenfalls einen Pfosten 216 und einen Querträger 218 als Teile des Traggestells 214 auf.

Das Traggestell 214 weist ferner ein Rahmenelement 220 auf, welches den Querträger 218 mit einem über dem Receiverrohr 206 und der Spiegelanordnung 212 verlaufenden Längsträger 222 verbindet. Weiterhin weist das Traggestell 214 eine erste Aufhängung 323 zum Halten des Receiverrohres 206 und eine zweite Aufhängung 324 zum Halten der Spiegelanordnung oder zumindest von Teilen der Spiegelanordnung auf. Die beiden Aufhängungen 323 und 324 sind unabhängig voneinander an dem Rahmenelement 220 angeordnet.

Genauer weist die erste Aufhängung 323 erste Ausgleichmittel in Form einer Laufkatze 326 auf, die entlang des Längsträgers 322 in Längsrichtung verfahrbar angeordnet ist. Der Längsträger bildet dadurch eine Schienenführung für die erste Aufhängung, die eine quasi unbegrenzte Längenausdehnung zu kompensieren vermag und damit der großen Ausdehnung des stark erwärmten Absorberrohres Rechnung trägt.

Die zweite Aufhängung 324 weist zweite Ausgleichsmittel in Form von Laschen 328 auf, die an ihrem festen Ende einstückig mit dem Rahmenelement 220 des Traggestells 214 und auf der anderen Seite an ihrem freien Ende mit Teilen der Spiegelanordnung 212 verbunden sind. Die Laschen 328 bilden einen monolithischen und in Längsrichtung, d. h. quer zur Darstellungsebene, flachen Festkörper, der an seinem freien Ende einen Freiheitsgrad im Wesentlichen in Längsrichtung definiert. Auf diese Weise bilden die Laschen 328 ein erstes Gelenk in Form eines Festkörpergelenks, das in Längsrichtung nur eine begrenzte Längenausdehnung zu kompensieren vermag, die aber für die vergleichsweise geringe Ausdehnung der Spiegelanordnung ausreicht. Im Übrigen kann die Auslenkung des Gelenks prinzipiell einfach auf die benötigte Dehnungslänge abgestimmt werden, indem die Länge der Laschen 328 und die Abstände aufeinander folgender zweiter Aufhängungen in Längsrichtung bzw. die Länge der dazwischen angeordneten Spiegelelemente geeignet gewählt werden.

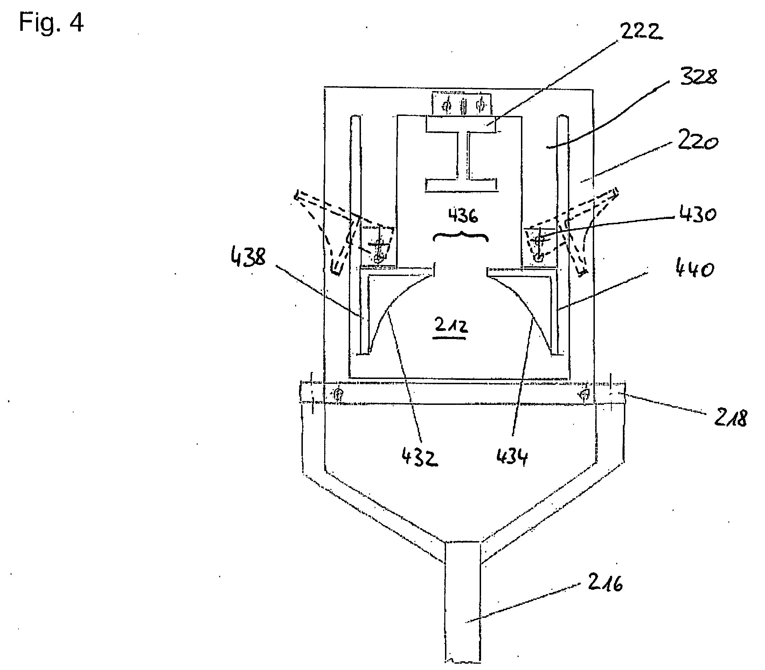

Weitere Einzelheiten insbesondere der zweiten Aufhängung 324 werden anhand von Figur 4 näher erläutert. Die zweite Aufhängung 324 weist neben der ein erstes Gelenk bildenden Lasche 328 ein zweites Gelenk 430 auf, welches als Drehgelenk zum Wegschwenken der Spiegelanordnung bzw. von Teilen der Spiegelanordnung quer zur Längsrichtung ausgebildet ist. Die Spiegelanordnung ist in der Betriebsstellung mittels durchgezogener Linien und in der seitlich und nach oben weggeschwenkten Wartungs- oder Revisionsstellung mittels gestrichelter Linien dargestellt. In der Revisionsstellung gibt die Spiegelanordnung das in der Mitte angeordnete Receiverrohr, vgl. Figur 3, für einen allseitigen Eingriff frei, und schützt auf diese Weise insbesondere die empfindlichen Spiegelelemente vor Beschädigungen durch den Eingriff.

Die Spiegelanordnung weist in der hier gezeigten Ausführungsform getrennte erste und zweite Spiegelelemente 432 und 434 mit einer dazwischenliegenden, in Längsrichtung verlaufenden Lücke 436 auf. Die Lücke 436 bildet zugleich die Lüftungsöffnungen im Bereich des Scheitelpunktes der Spiegelanordnung und eine Öffnung in der Spiegelanordnung, durch die hindurch die erste Aufhängung 323 vom Längsträger 222 zum Receiverrohr 206 geführt ist, vgl. Figur 3. Des Weiteren weist die Spiegelanordnung jeweils ein dem ersten und zweiten Spiegelelement 432, 434 zugeordnetes erstes und zweites Profilelement 438, 440 auf, das das zugeordnete Spiegelelement auf dessen dem Receiverrohr abgewandten Seite einhaust und somit vor Witterungseinflüssen und Staub schützt. Die ersten und zweiten Profilelemente 438, 440 sind beide L-förmig ausgestaltet.

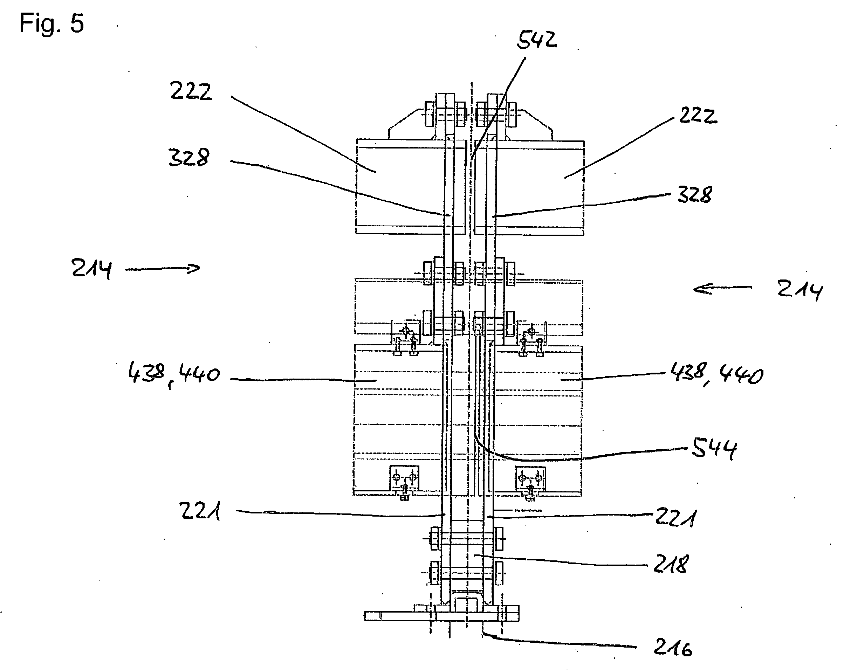

Weitere Einzelheiten insbesondere des Traggestells sind in Figur 5 zu erkennen. Diese stellt das Traggestell im Bereich des zuvor beschriebenen Rahmenelements 220 über dem Stützpfosten 216 dar. In der Seitenansicht zeigt sich, dass im Bereich der Stützpfosten zwei Segmente des Traggestells 214 aneinandergrenzen. An dem Querträger 218 ist deshalb beidseits jeweils ein Rahmenelement 220 angeschraubt, von denen jedes eines der benachbarten Segmente des Traggestells 214 einseitig trägt. Dies ist daran erkennbar, dass an jedem der beiden Rahmen 220 ein separates Element des Längsträgers 222 angeschraubt ist, wobei sich zwischen den beiden Elementen des Längsträgers 222 eine Fuge 542 ausbildet. Diese Fuge dient als Dehnungsfuge, da sich auch die Elemente des Längsträgers bei Erwärmung ausdehnen. Jedoch befindet sich der Längsträger, anders als bei den bekannten Konstruktionen, nicht gemeinsam mit den im Betrieb stark erwärmten optischen Elementen innerhalb eines Gehäuses sondern oberhalb der darunterliegenden Einhausung der Spiegelelemente 430, 434, so dass eine sehr viel geringere Dehnungsreserve ausreicht.

Weiterhin ist erkennbar, dass an dieser Stelle auch zwei aufeinander folgende Segmente L-förmige Profilelemente 438 bzw. 440 aufeinandertreffen, die an jeweils einem der beiden Rahmenelementen 220 mittels zugehöriger Laschen 328 einseitig aufgehängt sind. Sowohl zwischen den ersten bzw. zweiten Profilelementen (in der Darstellung ist davon nur jeweils eines zu erkennen) und den nicht erkennbaren zugeordneten ersten und zweiten Spiegelelementen ist in Längsrichtung ein Spalt 544 als einer Dehnungsfuge ausgebildet.

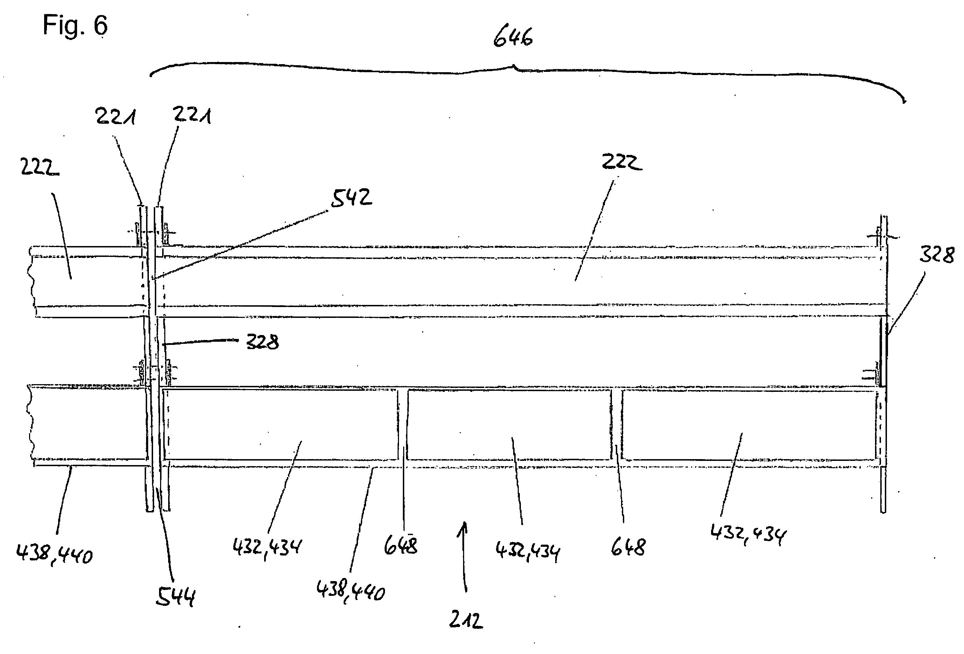

Ein vollständiges Segment des Traggestells zwischen zwei benachbarten Stützpfosten ist in Figur 6 als 646 dargestellt. Auch hier ist zwischen zwei auf demselben Stützpfosten montierten benachbarten Längsträgem 222 jeweils eine Fuge 542 sowie zwischen zwei benachbarten Profilelementen 438 bzw. 440 eine Fuge 544 zu erkennen. Weiterhin ist auch zu sehen, dass an dem Profilelement 438 und analog an dem spiegelbildlichen Profilelement 440 mehrere in Längsrichtung beabstandete erste bzw. zweite Spiegelelemente 432, 434 angeordnet sind. Abgebildet sind drei je Profilelement, jedoch kann die Anzahl nach belieben variieren. Die dazwischen jeweils ausgebildeten Fugen 648 innerhalb desselben zugeordneten Profilelements, dienen abermals als Dehnungsfugen und tragen dem Umstand Rechnung, dass auch zwischen den Spiegelelementen 432, 434 einerseits und den zugeordneten Profilelementen andererseits Temperaturdifferenzen und Ausdehnungsunterschiede insbesondere im Betrieb ausbilden können. Die ersten bzw. zweiten Spiegelelemente 432, 434 sind an dem zugeordneten ersten und zweiten Profilelement deshalb bevorzugt jeweils einseitig mittels Ausgleichsmitteln fixiert, während sie an der in Längsrichtung jeweils anderen Seite starr mit dem zugehörigen Profilelement verbunden sind. Die Ausgleichsmittel können beispielsweise Langlöcher umfassen.

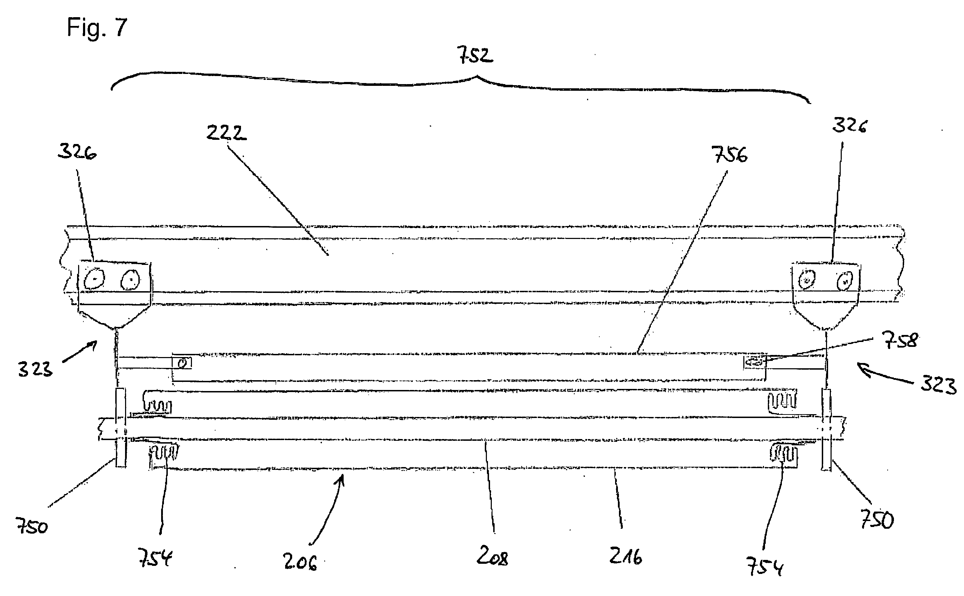

Figur 7 zeigt eine schematisch vereinfachte Darstellung von Detailaspekten der ersten Aufhängung in der Seitenansicht. Zu sehen ist das Receiverrohr 206, bestehend aus dem Absorberrohr 208 und dem dieses auf einem Längenabschnitt konzentrisch umgebenden Hüllrohr 210. Das Hüllrohr 210 ist mittels bekannter Ausgleichselemente in Form von Faltenbalgen 754 an beiden Enden mit dem Absorberrohr 208 verbunden.

An dieser Stelle wird deutlich, dass auch das Receiverrohr 206 eine Segmentierung aufweist, die durch die Länge des Hüllrohrs 210 vorgegeben ist, während sich das Absorberrohr 208 ohne Unterbrechung (quasi endlos) fortsetzt. Dies muss selbstverständlich so sein, damit das die Wärme transportierende Fluid das Absorberrohr 208 von einem bis zum anderen Ende ungehindert durchströmen kann. Zwischen zwei benachbarten Hüllrohren 210 ist jeweils eine Lücke gelassen, die einerseits als Dehnungsausgleich für die Hüllrohre dient und in der andererseits ein kurzer Abschnitt des Absorberrohres freiliegt, an dem die erste Aufhängung 323 mit einer Klammer 750 zur Befestigung des Absorberrohres 208 an ihrem freien Ende angreift. Über dem Receiverrohr 206 ist wiederum der Längsträger 222 dargestellt, an dem die erste Aufhängung 323 mit einer Laufkatze 326 als erstes Ausgleichsmittel in Längsrichtung verfahrbar angeordnet ist.

Bei dieser Konstruktion wird bei einer Längenausdehnung des Absorberrohrs 208 das Hüllrohr 210 relativ zu dem Längsträger 222 mit bewegt. Eine differentielle Längenänderung des Absorberrohres 208 relativ zu dem Hüllrohr 210 aufgrund unterschiedlicher Erwärmung und unterschiedlicher Materialien wird allein durch die Faltenbalge 754 ermöglicht.

Im Vergleich der Figuren 6 und 7 wird außerdem deutlich, dass die Aufhängung und Segmentlänge der Receiverrohre von der Aufhängung der Spiegelanordnung und Segmentlänge der Längsträger, Profilelementen oder Spiegelelemente unabhängig ist.

Des Weiteren ist in Figur 7 ein drittes Profilelement 756 für ein drittes Spiegelelement, das hier nicht zu erkennen ist, unmittelbar oberhalb des Receiverrohrs 210 dargestellt, welches auf beiden Seiten an der ersten Aufhängung 323 befestigt ist. Das dritte Profilelement 756 ist einseitig mittels Ausgleichsmitteln, hier in Form eines Langloches 758, und auf der anderen Seite starr mit der jeweils zugeordneten ersten Aufhängung 323 verbunden, was eine unterschiedliche Längenausdehnung des Absorberrohrs 208 einerseits und des Profilelements 756 andererseits erlaubt.

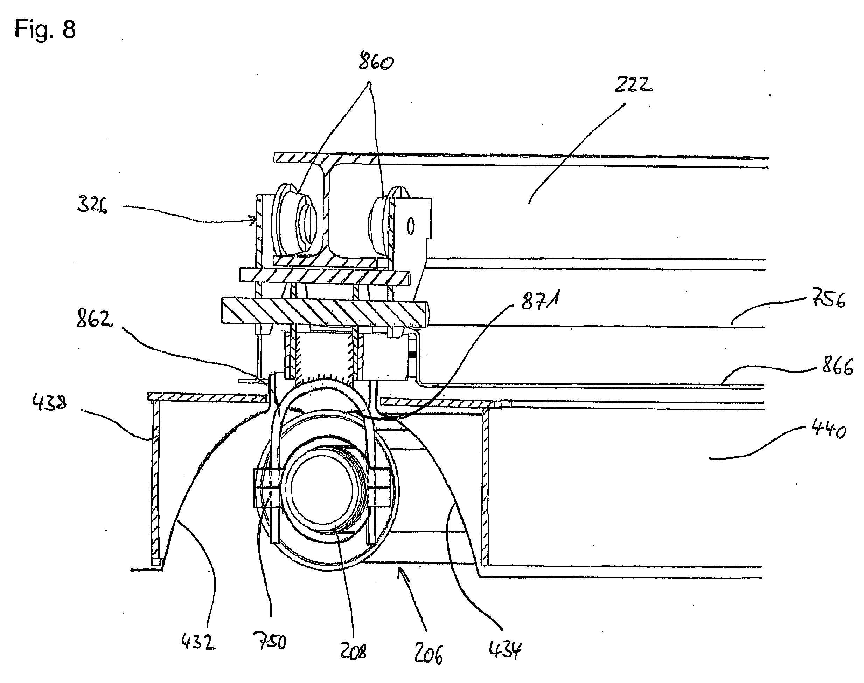

Weitere Einzelheiten insbesondere der ersten Aufhängung 323 sind in Figur 8 gezeigt, in der diese im Schnitt und perspektivisch dargestellt ist. Die erste Aufhängung 323 weist, wie gesagt, an ihrem oberen Ende eine Laufkatze 326 auf, welche mittels zweier Rollenpaare 860, von denen im Halbschnitt nur eines zu sehen ist, in Längsrichtung verfahrbar an dem Längsträger 222 hängen. An ihrem unteren Ende ist die Laufkatze 326 mittels eines Bügels 862 mit den Klammern 750 verbunden, die das Absorberrohr 208 fixieren.

In dieser Darstellung ist das dritte Profilelement 756 gut zu erkennen, welches das dritte Spiegelelement 871 auf dessen dem Receiverrohr 206 abgewandten Seite einhaust. Das dritte Profilelement 756 ist zu diesem Zweck im wesentlichen U-förmig ausgestaltet, wobei es an den Enden seiner beiden Schenkel seitliche Auskragungen 866 aufweist, die mit den L-förmigen ersten und zweiten Profilelementen 438 und 440 eine Überdeckung bilden. Die darunterliegende Spiegelanordnung bestehend aus den ersten, zweiten und dritten Spiegelelementen 432, 434, 871 ist hierdurch hinreichend vor Umwelteinflüssen und Staub geschützt.

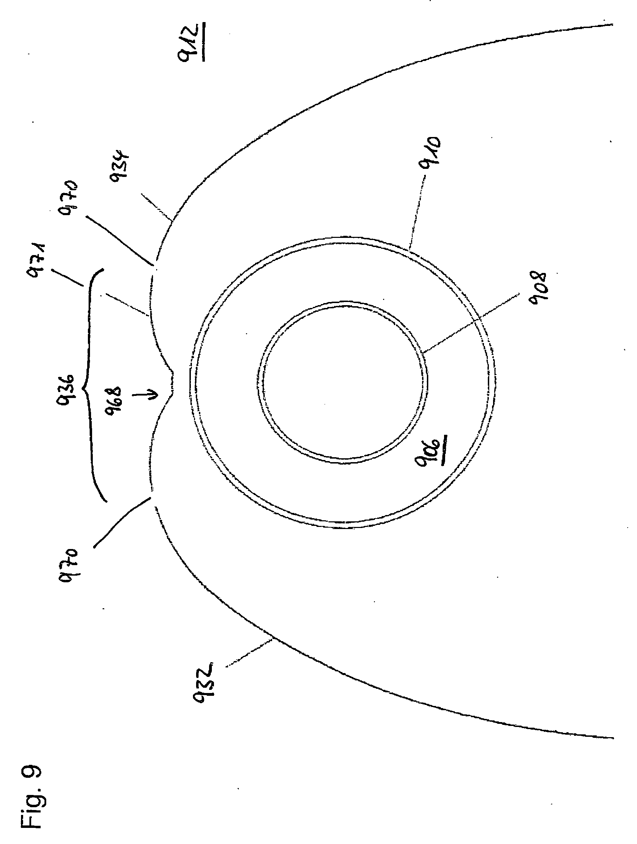

Figur 9 stellt in schematisch stark vereinfachter Form die optischen Komponenten des erfindungsgemäßen Receiversystems gemäß einer ersten Ausführungsform dar. Zu sehen ist darin das Receiverrohr 906 mit einem Absorberrohr 908 und einem Hüllrohr 910, welches das Absorberrohr 908 konzentrisch umgibt. Zu den optischen Komponenten zählen ferner die Spiegelanordnung 912 oberhalb des Receiverrohres 906, welche in Längsrichtung in die beiden ersten und zweiten Spiegelelementen 932 und 934 mit einer dazwischenliegenden Lücke 936 unmittelbar über dem Receiverrohr 906 getrennt ist, die durch einen Spiegelabschnitt 968 zumindest teilweise optisch geschlossen ist. Zumindest teilweise optisch geschlossen bedeutet in diesem Fall, dass im Querschnitt betrachtet jeweils ein Luftspalt 970 zwischen dem ersten Spiegelelement 932 und dem Spiegelabschnitt 968 sowie zwischen dem zweiten Spiegelelement 934 und dem Spiegelabschnitt 968 verbleibt. Beide Luftspalte 970 stellen ausreichende Lüftungsöffnungen im Bereich der beiden Scheitelpunkte der Spiegelsymmetrischen Profils der Spiegelanordnung bereit.

Die Lücke 936 zwischen dem ersten und dem zweiten Spiegelelement 932 und 934 dient ferner als Öffnung, durch die hindurch die erste Aufhängung von dem hier nicht dargestellten Längsträger oberhalb der optischen Komponenten zum Receiverrohr geführt ist. Hierdurch ist es möglich, die erste Aufhängung zum Halten des Receiverrohres 906 und des Spiegelabschnittes 968 unabhängig von der zweiten Aufhängung zum Halten von Teilen der Spiegelanordnung, nämlich dem ersten und dem zweiten Spiegelelement 932, 943 auszubilden, so dass diese unterschiedliche Ausdehnungen des Absorberrohres 908 einerseits und der ersten und zweiten Spiegelelemente 932, 934 andererseits erlauben.

Der Spiegelabschnitt 968 ist in dieser Ausführungsform als drittes Spiegelelement 971 ausgebildet, welches ohne direkten Kontakt mit dem Hüllrohr 912 und oberhalb desselben positioniert ist.

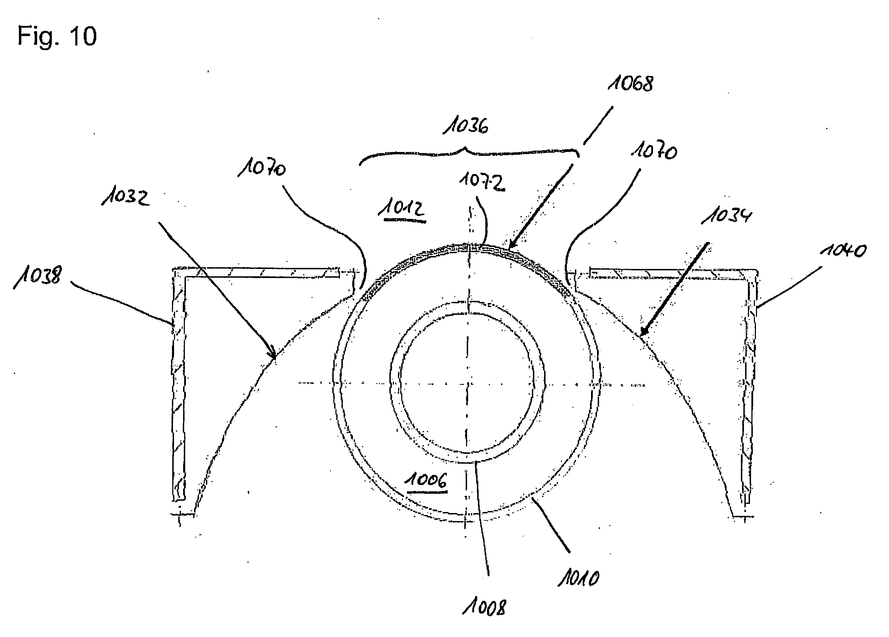

Figur 10 zeigt eine zweite Ausgestaltungsvariante der optischen Komponenten des erfindungsgemäßen Receiversystems. Dieses weist ein Receiverrohr 1006 bestehend aus einem Absorberrohr 1008 und einem Hüllrohr 1010 sowie eine Spiegelanorndung 1012 bestehend aus einem ersten Spiegelelement 1032, einem zweiten Spiegelelement 1034 und einem Spiegelabschnitt 1068 auf, der die Lücke 1036 zwischen dem ersten und dem zweiten Spiegelabschnitt zumindest teilweise optisch schließt. Ein wesentlicher Unterschied zu dem Ausführungsbeispiel gemäß Figur 9 besteht darin, dass der Spiegelabschnitt 1068 als verspiegelte Oberfläche 1074 des Hüllrohres 1010 ausgebildet ist. Diese Ausgestaltungsvariante hat den Vorteil eines einfacheren Aufbaus, da das dritte Spiegelelement nebst dessen Befestigung entfallen kann, da der Spiegelabschnitt einen integralen Bestandteil des Receiverrohres bildet und somit auch automatisch immer mit dem Receiverrohr mitgeführt wird.

Weiterhin sind auch in dieser Ausführungsform Luftspalte 1070 zwischen dem ersten Spiegelelement 1032 und dem Spiegelabschnitt 1068 sowie zwischen dem zweiten Spiegelelement 1034 und dem Spiegelabschnitt 1068 zu erkennen die Lüftungsöffnungen im Bereich des einen Scheitelpunktes der Spiegelanordnung bereitstellen, wobei sich die Luftspalte 1070 nur wenig unterhalb des Scheitelpunktes befinden. Der vertikale Abstand zum Scheitelpunkt beträgt vorzugsweise jedoch nicht mehr als 10% der Gesamthöhe des Kurvenprofils.

Schließlich ist in Figur 10 jeweils ein erstes Profilelement 1038, das dem ersten Spiegelelement 1032 zugeordnet ist, und ein zweites Profilelement 1040, das dem zweiten Spiegelelement 1034 zugeordnet ist, dargestellt. Die beiden Profilelemente 1038 und 1040 sind L-förmig ausgestaltet und hausen die ersten und zweiten Spiegelelemente auf deren dem Receiverrohr 1006 abgewandten Seite ein.

Eine dritte Ausführungsform der optischen Komponenten des erfindungsgemäßen Receiversystems ist in Figur 11 schematisch dargestellt. Diese entspricht hinsichtlich der Spiegelanordnung 1112 im Wesentlichen der Ausführungsform aus Figur 9. Die Spiegelanordnung setzt sich wie dort aus einem ersten, einem zweiten und einem dritten Spiegelelement 1132, 1134 und 1171 zusammen.

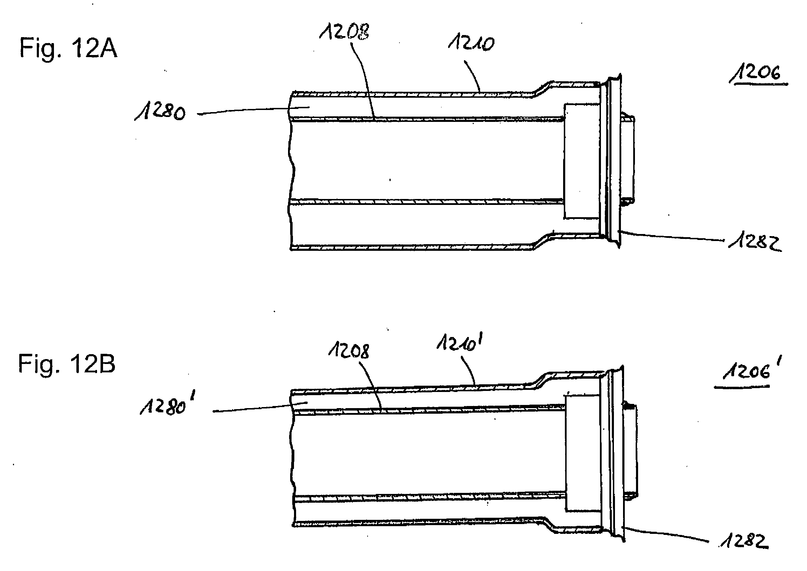

Ein Unterschied zu dem Ausführungsbeispiel in Figur 9 besteht in einer abgewandelten Form des Receiverrohres 1106, bei welchem das Absorberrohr 1108 exzentrisch in dem Hüllrohr 1110 angeordnet ist. Genauer gesagt ist das Absorberrohr 1108 nach oben verschoben, so dass der Spalt zwischen der Mantelfläche des Absorberrohres 1108 und der Mantelfläche des Hüllrohres 1110 auf der oberen, dem dritten Spiegelelement 1171 zugewandten Seite verringert ist. Hierdurch werden Strahlungsverluste minimiert, siehe auch Figur 12A.

Weiterhin sind in Figur 11 ein erstes, dem ersten Spiegelelement 1132 zugeordnetes Profilelement 1138, ein zweites, dem zweiten Spiegelelement 1134 zugeordnetes Profilelement 1140 und ein drittes, dem dritten Spiegelelement 1171 zugeordnetes Profilelement 1156 abgebildet. Die beiden ersten und zweiten Profilelemente 1138, 1140 sind L-förmig ausgebildet und hausen die jeweils zugeordneten ersten und zweiten Spiegelelemente ein. Das dritte Profilelement 1156 ist U-förmig ausgebildet und haust das dritte Spiegelelement 1171 auf dessen dem Receiverrohr 1106 Seite ein. Gleichzeitig überdecken sich die drei Profilelemente dergestalt, dass die Spiegelelemente und das Receiverrohr von der Oberseite gegen Umwelteinflüsse, wie beispielsweise Niederschlag, Sonneneinstrahlung, Wind oder Staub geschützt sind. Ein weiterer Schutz kann durch geeignete Aufbördelungen der Ränder sowie die hier nicht dargestellte seitliche Auskragung (vergleiche Figuren 3 und 8) in an sich bekannter Weise erzielt werden.

Ferner ist in Figur 11 illustriert, dass die gesamte Spiegelanordnung eine Vielzahl von Luftspalten aufweist. Dies sind zum einen die bereits vorstehend diskutierten Luftspalte 1170 zwischen dem ersten bzw. dem zweiten Spiegelelement 1132, 1134 einerseits und dem in Form des dritten Spiegelelements 1171 gebildeten Spiegelabschnittes. Ein weiterer Luftspalt ist zwischen dem ersten Profilelement 1138 und dem dritten Profilelement 1156 sowie symmetrisch hierzu zwischen dem zweiten Profilelement 1140 und dem dritten Profilelement 1156 ausgebildet.

Es ist auch zu erkennen, dass die Spiegelanordnung im Querschnitt ein spiegelsymmetrisches Kurvenprofil mit zwei oben liegenden Scheitelpunkten aufweist, wobei sich die Luftspalte 1170 jeweils im Bereich dieser Scheitelpunkte befinden. "Im Bereich der Scheitelpunkte" schließt auch einen Bereich unterhalb des Scheitelpunktes oder hier der Scheitelpunkte des Kurvenprofils von bis zu 10% der Gesamthöhe des Kurvenprofils ein. Jedenfalls tragen die im Bereich der Scheitelpunkte angeordneten Luftspalte 1170 dazu bei, dass aufsteigende Warmluft sich nicht in der Spiegelanordnung staut, sondern durch die Luftspalte nach oben abziehen kann, so dass die Temperaturschwankungen, denen die einzelnen Spiegelelemente ausgesetzt sind, reduziert werden können.

Damit die aufsteigende Warmluft das aus den drei Profilelementen 1138, 1140 und 1156 gebildete Gehäuse vollständig verlassen kann, sind beidseits jeweils die Spalte 1174 zwischen den Profilelementen vorgesehen. Eine Abluftströmung ist mittels Pfeilen gekennzeichnet.

Weitere Spalte befinden sich jeweils zwischen den ersten und zweiten Spiegelelementen 1132 bzw. 1134 und den jeweils zugeordneten Profilelementen 1138 bzw. 1140. Hier befinden sich sowohl am unteren Ende die Spalte 1176 sowie am oberen Ende die Spalte 1178, die eine Luftzirkulation auch auf der Außenseite der Spiegelelemente 1132 und 1134 erlauben, so dass eine optimale Kühlung dieser Spiegelelemente sichergestellt ist.

Die Figuren 12A und 12B zeigen zwei verschiedene Ausführungsformen abgewandelter Receiverrohre 1206 bzw. 1206'. Diese weisen jeweils ein baugleiches Absorberrohr 1208, aber unterschiedliche Hüllrohre 1210 bzw. 1210' auf. Das Hüllrohr 1212 ist in einem mittleren Abschnitt des Receiverrohres gekröpft, so dass in diesem Abschnitt das Absorberrohr 1208 exzentrisch in dem Hüllrohr 1212 verläuft. Im Unterschied hierzu ist das Hüllrohr 1210' gemäß Figur 12B in diesem Abschnitt nur verjüngt, wobei das Absorberrohr 1208 und das Hüllrohr 1210' also eine konzentrische Anordnung bilden. Beide Varianten haben zur Folge, dass sich der Spalt 1280 bzw. 1280' zwischen dem Absorberrohr und dem Hüllrohr in Längsrichtung mittleren Abschnitts des Receiverrohres auf dessen Oberseite verjüngt, so dass an dieser Stelle ein geringerer Strahlungsverlust auftritt, wie anhand von Figur 11 bereits erläutert wurde. Beide Maßnahmen, ein gekröpftes und ein verjüngtes Hüllrohr können grundsätzlich auch kombiniert werden.

Im Übrigen ist den Figuren die Verbindung zwischen dem Absorberrohr 1208 und dem Hüllrohr 1210 bzw. 1210' zu erkennen, die in beiden Fällen identisch ausgestaltet. Sie sorgt für eine Abdichtung des von dem Hüllrohr 1210 bzw. 1210' eingeschlossenen Volumens, welches in der Regel evakuiert ist. Neben der Abdichtung hat die Verbindung 1282 gleichzeitig die Funktion eines Dehnungsausgleiches. Sie weist deshalb in an sich bekannter Weise einen Faltenbalg auf.

Erläuternd sei noch angemerkt, dass die Figuren 12A und 12B jeweils einen endseitigen Abschnitt des Receiverrohres zeigen, welches sich nach links fortsetzt und auf der gegenüberliegenden Seite einen spiegelverkehrten Abschluss aufweist.

### Bezugszeichenliste

- 100: Fresnel-Solaranlage
- 102: Primärkonzentratorspiegel
- 104: Receiversystem
- 106: Receiverrohr
- 108: Absorberrohr
- 110: Hüllrohr
- 112: Spiegelanordnung
- 114: Traggestell
- 116: Stützpfosten
- 118: Quersträger

- 204: Receiversystem
- 206: Receiverrohr
- 208: Absorberrohr
- 210: Hüllrohr
- 212: Spiegelanordnung
- 214: Traggestell
- 216: Stützplatte
- 218: Quersträger
- 220: Rahmenelement
- 222: Längsträger

- 323: erste Aufhängung
- 324: zweite Aufhängung
- 326: Laufkatze
- 328: Lasche

- 430: zweites Gelenk, Drehgelenk
- 432: erstes Spiegelelement
- 434: zweites Spiegelelement
- 436: Lücke, Öffnung
- 438: erstes Profilelement
- 440: zweites Profilelement

- 542: Spalt
- 544: Spalt

- 646: Segment des Traggestells
- 648: Spalt

- 750: Klammer
- 752: Segment der ersten Aufhängung
- 754: Faltenbalg
- 756: drittes Profilelement
- 758: Ausgleichsmittel

- 860: Rollenpaar
- 862: Bügel
- 866: seitliche Auskragung

- 906: Receiverrohr
- 908: Absorberrohr
- 910: Hüllrohr
- 912: Spiegelanordnung
- 932: erstes Spiegelelement
- 934: zweites Spiegelelement
- 936: Lücke
- 968: Spiegelabschnitt
- 970: Luftspalt
- 971: drittes Spiegelelement

- 1006: Receiverrohr
- 1008: Absorberrohr
- 1010: Hüllrohr
- 1012: Spiegelanordnung
- 1032: erstes Spiegelelement
- 1034: zweites Spiegelelement
- 1036: Lücke
- 1038: erstes Profilelement
- 1040: zweites Profilelement
- 1068: Spiegelabschnitt
- 1070: Luftspalt
- 1072: verspiegelte Oberfläche

- 1106: Receiverrohr
- 1108: Absorberrohr
- 1110: Hüllrohr
- 1112: Spiegelanordnung
- 1132: erstes Spiegelelement
- 1134: zweites Spiegelelement
- 1138: erstes Profilelement
- 1140: zweites Profilelement
- 1156: drittes Profilelement
- 1170: Luftspalt
- 1171: drittes Spiegelelement
- 1174: Luftspalt
- 1176: Luftspalt
- 1178: Luftspalt
- 1180: Spalt zwischen Absorber- und Hüllrohr
- 1206: Receiverrohr
- 1206': Receiverrohr
- 1208: Absorberrohr
- 1208': Absorberrohr
- 1210: Hüllrohr
- 1210': Hüllrohr
- 1280: Spalt zwischen Absorber- und Hüllrohr
- 1280': Spalt zwischen Absorber- und Hüllrohr
- 1282: Verbindung

## Patentansprüche

1. Receiversystem (104, 204) für eine Fresnel-Solaranlage(100) mit einem eine Längsrichtung definierenden Absorberrohr (108, 208, 908, 1008, 1108) und einer zur Längsrichtung parallelen Spiegelanordnung (112, 212, 912, 1012, 1112) mit einem spiegelsymmetrischen Kurvenprofil mit wenigstens einem obenliegenden Scheitelpunkt zur Konzentration von Lichtstrahlen auf das Absorberrohr,
**dadurch gekennzeichnet, dass** die Spiegelanordnung (112, 212, 912, 1012, 1112) im Bereich des Scheitelpunktes angeordnete Lüftungsöffnungen aufweist.

2. Receiversystem (104, 204) nach Anspruch 1,
**gekennzeichnet durch** ein Receiverrohr (106, 206, 906, 1006, 1106), bestehend aus dem Absorberrohr (108, 208, 908, 1008, 1108) und einem wenigstens abschnittsweise um das Absorberrohr (108, 208, 908, 1008, 1108) angeordneten Hüllrohr (110, 210, 910, 1010, 1110).

3. Receiversystem (104, 204) nach Anspruch 1 oder 2,
**dadurch gekennzeichnet, dass** die Spiegelanordnung (112, 212, 912, 1012, 1112) in Längsrichtung getrennte, erste und zweite Spiegelelemente (432, 434, 932, 934, 1032, 1034, 1132, 1134) mit einer dazwischen liegenden Lücke (436, 936, 1036) aufweist.

4. Receiversystem (104, 204) nach Anspruch 3,
**dadurch gekennzeichnet, dass** die Spiegelanordnung (112, 212, 912, 1012, 1112) einen Spiegelabschnitt (968, 1068) aufweist, der die Lücke (436, 936, 1036) zumindest teilweise optisch schließt.

5. Receiversystem (104, 204) nach Anspruch 4,
**dadurch gekennzeichnet, dass** jeweils ein Luftspalt (970, 1070, 1170) zwischen dem ersten Spiegelelement (932, 1032, 1132) und dem Spiegelabschnitt (968, 1068) und zwischen dem zweiten Spiegelelement (934, 1034, 1134) und dem Spiegelabschnitt (968, 1068) verbleibt, wobei die Luftspalte die Lüftungsöffnungen bilden.

6. Receiversystem (104, 204) nach einem der Ansprüche 3 bis 5,
**dadurch gekennzeichnet, dass** die Spiegelanordnung (112, 212, 912, 1012, 1112) jeweils ein dem ersten und zweiten Spiegelelement (432, 434, 932, 934, 1032, 1034, 1132, 1134) zugeordnetes erstes und zweites Profilelement (438, 440, 1038, 1040, 1138, 1140) aufweist, das das zugeordnete Spiegelelement auf dessen dem Absorberrohr (108, 208, 908, 1008, 1108) abgewandten Seite einhaust.

7. Receiversystem (104, 204) nach Anspruch 6,
**dadurch gekennzeichnet, dass** jeweils zwischen Spiegelelement (432, 434, 932, 934, 1032, 1034, 1132, 1134) und Profilelement (438, 440, 1038, 1040, 1138, 1140) Lüftungsöffnungen vorgesehen sind.

8. Receiversystem (104, 204) nach einem der Ansprüche 4 oder 5,
**dadurch gekennzeichnet, dass** der Spiegelabschnitt (968, 1068) als drittes Spiegelelement (971, 1171) ausgebildet ist.

9. Receiversystem (104, 204) nach Anspruch 8,
**dadurch gekennzeichnet, dass** die Spiegelanordnung (112, 212, 912, 1012, 1112) ein dem dritten Spiegelelement (971, 1171) zugeordnetes drittes Profilelement (756, 1156) aufweist, das das dritte Spiegelelement auf dessen dem Absorberrohr (108, 208, 908, 1008, 1108) abgewandten Seite einhaust.

10. Receiversystem (104, 204) nach einem der Ansprüche 4 oder 5,
**dadurch gekennzeichnet, dass** der Spiegelabschnitt (968, 1068) als verspiegelte Oberfläche (1072) des Hüllrohres (110, 210, 910, 1010, 1110) ausgebildet ist.

11. Receiversystem (104, 204) nach einem der vorstehenden Ansprüche,
**gekennzeichnet durch** ein Traggestell (114, 214) für das Absorberrohr (108, 208, 908, 1008, 1108) und die Spiegelanordnung (112, 212, 912, 1012, 1112), an dem unabhängig voneinander eine erste Aufhängung (323) zum Halten des Absorberrohres und eine zweite Aufhängung (324) zum Halten der Spiegelanordnung oder zumindest von Teilen der Spiegelanordnung montiert sind, wobei die erste Aufhängung erste Ausgleichsmittel und die zweite Aufhängung zweite Ausgleichsmittel aufweisen und die ersten und zweiten Ausgleichsmittel unterschiedliche Ausdehnungen des Absorberrohres und der Spiegelanordnung in Längsrichtung erlauben.

12. Receiversystem (104, 204) nach Anspruch 11 in verbindung mit Auspruch 3, **dadurch gekennzeichnet, dass** das Traggestell (114, 214) einen parallel zum Absorberrohr (108, 208, 908, 1008, 1108) und der Spiegelanordnung (112, 212, 912, 1012, 1112) verlaufenden Längsträger (222) aufweist, an dem die erste Aufhängung (323) montiert ist, und dass die erste Aufhängung (323) vom Längsträger (222) durch die Lücke (436, 936, 1036) zwischen den ersten und zweiten Spiegeielementen (432, 434, 932, 934, 1032, 1034, 1132, 1134) zum Absorberrohr (108, 208, 908, 1008, 1108) geführt ist.

13. Receiversystem (104, 204) nach einem der Ansprüche 11 bis 12,
**dadurch gekennzeichnet, dass** die zweite Aufhängung (324) als zweite Ausgleichsmittel ein erstes Gelenk aufweist, welches das Traggestell (114, 214) auf der einen Seite mit der Spiegelanordnung (112, 212, 912, 1012, 112) oder zumindest Teilen der Spiegelanordnung auf der anderen Seite verbindet.

14. Receiversystem (104, 204) nach einem der Ansprüche 11 bis 13,
**dadurch gekennzeichnet, dass** die erste Aufhängung (323) als erste Ausgleichsmittel eine Wälz- oder Gleitlageranordnung, insbesondere eine Laufkatze (326), aufweist, die entlang des Längsträgers (222) verfahrbar angeordnet ist.

15. Receiversystem (104, 204) nach einem der vorstehenden Ansprüche, **dadurch gekennzeichnet, dass** das Kurvenprofil der Spiegelanordnung (112, 212, 912, 1012, 1112) zwei obenliegende Scheitelpunkte aufweist, wobei die Lüftungsöffnungen jeweils im Bereich beider Scheitelpunkte angeordnet sind.

## Claims

1. Receiver system (104, 204) for a Fresnel solar plant (100), having an absorber tube (108, 208, 908, 1008, 1108) defining a longitudinal direction, and a mirror arrangement (112, 212, 912, 1012, 1112), parallel to the longitudinal direction, having a mirror-symmetrical curved profile having at least one top vertex for concentrating light beams onto the absorber tube, **characterized in that** the mirror arrangement (112, 212, 912, 1012, 1112) has ventilation openings arranged in the region of the vertex.

2. Receiver system (104, 204) according to Claim 1, **characterized by** a receiver tube (106, 206, 906, 1006, 1106) consisting of the absorber tube (108, 208, 908, 1008, 1108) and a cladding tube (110, 210, 910, 1010, 1110) arranged at least sectionally around the absorber tube (108, 208, 908, 1008, 1108).

3. Receiver system (104, 204) according to Claim 1 or 2,
**characterized in that** the mirror arrangement (112, 212, 912, 1012, 1112) has first and second mirror elements (432, 434, 932, 934, 1032, 1034, 1132, 1134) which are separated in the longitudinal direction with a gap (436, 936, 1036) located in between.

4. Receiver system (104, 204) according to Claim 3,
**characterized in that** the mirror arrangement (112, 212, 912, 1012, 1112) has a mirror section (968, 1068) which optically closes the gap (436, 936, 1036) at least partially.

5. Receiver system (104, 204) according to Claim 4,
**characterized in that** in each case an air gap (970, 1070, 1170) remains between the first mirror element (932, 1032, 1132) and the mirror section (968, 1068) and between the second mirror element (934, 1034, 1134) and the mirror section (968, 1068), wherein the air gaps form the ventilation openings.

6. Receiver system (104, 204) according to one of Claims 3 to 5,
**characterized in that** the mirror arrangement (112, 212, 912, 1012, 1112) has in each case a first and second profile element (438, 440, 1038, 1040, 1138, 1140) associated with the first and second mirror element (432, 434, 932, 934, 1032, 1034, 1132, 1134), said profile element enclosing the associated mirror element on the side thereof facing away from the absorber tube (108, 208, 908, 1008, 1108).

7. Receiver system (104, 204) according to Claim 6,
**characterized in that** ventilation openings are provided in each case between mirror element (432, 434, 932, 934, 1032, 1034, 1132, 1134) and profile element (438, 440, 1038, 1040, 1138, 1140).

8. Receiver system (104, 204) according to either of Claims 4 and 5,
**characterized in that** the mirror section (968, 1068) is in the form of a third mirror element (971, 1171).

9. Receiver system (104, 204) according to Claim 8,
**characterized in that** the mirror arrangement (112, 212, 912, 1012, 1112) has a third profile element (756, 1156) associated with the third mirror element (971, 1171), said profile element enclosing the third mirror element on the side thereof facing away from the absorber tube (108, 208, 908, 1008, 1108).

10. Receiver system (104, 204) according to either of Claims 4 and 5,
**characterized in that** the mirror section (968, 1068) is in the form of a mirrored surface (1072) of the cladding tube (110, 210, 910, 1010, 1110).

11. Receiver system (104, 204) according to one of the preceding claims,
**characterized by** a supporting framework (114, 214) for the absorber tube (108, 208, 908, 1008, 1108) and the mirror arrangement (112, 212, 912, 1012, 1112), a first suspension means (323) for holding the absorber tube and a second suspension means (324) for holding the mirror arrangement or at least parts of the mirror arrangement being mounted independently of one another on the supporting framework (114, 214), wherein the first suspension means has first compensating means and the second suspension means has second compensating means and the first and second compensating means allow different expansions of the absorber tube and of the mirror arrangement in the longitudinal direction.

12. Receiver system (104, 204) according to Claim 11 in conjunction with Claim 3,
**characterized in that** the supporting framework (114, 214) has a longitudinal member (222) extending in a manner parallel to the absorber tube (108, 208, 908, 1008, 1108) and to the mirror arrangement (112, 212, 912, 1012, 1112), the first suspension means (323) being mounted on said longitudinal member (222), and **in that** the first suspension means (323) is guided from the longitudinal member (222) through the gap (436, 936, 1036) between the first and second mirror elements (432, 434, 932, 934, 1032, 1034, 1132, 1134) to the absorber tube (108, 208, 908, 1008, 1108).

13. Receiver system (104, 204) according to either of Claims 11 to 12,
**characterized in that** the second suspension means (324) has, as second compensating means, a first joint which connects the supporting framework (114, 214) on one side to the mirror arrangement (112, 212, 912, 1012, 1112) or at least parts of the mirror arrangement on the other side.

14. Receiver system (104, 204) according to one of Claims 11 to 13,
**characterized in that** the first suspension means (323) has, as first compensating means, a rolling-bearing or plain-bearing arrangement, in particular a trolley (326), which is arranged so as to be movable along the longitudinal member (222).

15. Receiver system (104, 204) according to one of the preceding claims,
**characterized in that** the curved profile of the mirror arrangement (112, 212, 912, 1012, 1112) has two top vertices, wherein the ventilation openings are each arranged in the region of the two vertices.

## Revendications

1. Système récepteur (104, 204) pour une installation solaire Fresnel (100) avec un tube absorbeur (108, 208, 908, 1008, 1108) définissant une direction longitudinale et un agencement de miroirs (112, 212, 912, 1012, 1112) parallèle à la direction longitudinale, avec un profil courbe symétrique par réflexion avec au moins un point culminant supérieur pour la concentration des rayons lumineux sur le tube absorbeur, **caractérisé en ce que** l'agencement de miroirs (112, 212, 912, 1012, 1112) présente des ouvertures de ventilation dans la région du point culminant.

2. Système récepteur (104, 204) selon la revendication 1, **caractérisé par** un tube récepteur (106, 206, 906, 1006, 1106), se composant du tube absorbeur (108, 208, 908, 1008, 1108) et d'un tube de gaine (110, 210, 910, 1010, 1110) agencé au moins localement autour du tube absorbeur (108, 208, 908, 1008, 1108).

3. Système récepteur (104, 204) selon la revendication 1 ou 2, **caractérisé en ce que** l'agencement de miroirs (112, 212, 912, 1012, 1112) présente des premiers et des deuxièmes éléments de miroirs (432, 434, 932, 934, 1032, 1034, 1132, 1134) séparés en direction longitudinale, avec un intervalle (436, 936, 1036) situé entre eux.

4. Système récepteur (104, 204) selon la revendication 3, **caractérisé en ce que** l'agencement de miroirs (112, 212, 912, 1012, 1112) présente une partie de miroir (968, 1068) qui ferme optiquement au moins en partie l'intervalle (436, 936, 1036).

5. Système récepteur (104, 204) selon la revendication 4, **caractérisé en ce qu'**il subsiste chaque fois un espace d'air (970, 1070, 1170) entre le premier élément de miroir (932, 1032, 1132) et la partie de miroir (968, 1068) et entre le deuxième élément de miroir (934, 1034, 1134) et la partie de miroir (968, 1068), dans lequel les espaces d'air forment les ouvertures de ventilation.

6. Système récepteur (104, 204) selon l'une quelconque des revendications 3 à 5, **caractérisé en ce que** l'agencement de miroirs (112, 212, 912, 1012, 1112) présente respectivement un premier et un deuxième éléments de profilé (438, 440, 1038, 1040, 1138, 1140) associés au premier et au deuxième éléments de miroir (432, 434, 932, 934, 1032, 1034, 1132, 1134), qui héberge l'élément de miroir associé sur son côté détourné du tube absorbeur (108, 208, 908, 1008, 1108).

7. Système récepteur (104, 204) selon la revendication 6, **caractérisé en ce qu'**il est prévu des ouvertures de ventilation chaque fois entre l'élément de miroir (432, 434, 932, 934, 1032, 1034, 1132, 1134) et l'élément de profilé (438, 440, 1038, 1040, 1138, 1140).

8. Système récepteur (104, 204) selon l'une des revendications 4 ou 5, **caractérisé en ce que** la partie de miroir (968, 1068) est réalisée en tant que troisième élément de miroir (971, 1171).

9. Système récepteur (104, 204) selon la revendication 8, **caractérisé en ce que** l'agencement de miroirs (112, 212, 912, 1012, 1112) présente un troisième élément de profilé (756, 1156) associé au troisième élément de miroir (971, 1171), qui héberge le troisième élément de miroir sur son côté détourné du tube absorbeur (108, 208, 908, 1008, 1108).

10. Système récépteur (104, 204) selon l'une quelconque des revendications 4 ou 5, **caractérisé en ce que** la partie de miroir (968, 1068) est réalisée en tant que surface réfléchissante (1072) du tube de gaine (110, 210, 910, 1010, 1110).

11. Système récepteur (104, 204) selon l'une quelconque des revendications précédentes, **caractérisé par** une charpente de support (114, 214) pour le tube absorbeur (108, 208, 908, 1008, 1108) et l'agencement de miroirs (112, 212, 912, 1012, 1112), sur laquelle une première suspension (323) pour maintenir le tube absorbeur et une deuxième suspension (324) pour maintenir l'agencement de miroirs ou au moins une partie de l'agencement de miroirs ou au moins une partie de l'agencement de miroirs sont montées indépendamment l'une de l'autre, dans lequel la première suspension présente des premiers moyens de compensation et la deuxième suspension présente des deuxièmes moyens de compensation et les premiers et les deuxièmes moyens de compensation permettent des dilatations différentes du tube absorbeur et de l'agencement de miroirs en direction longitudinale.

12. Système récepteur (104, 204) selon la revendication 11 en liaison avec la revendication 3, **caractérisé en ce que** la charpente de support (114, 214) présente une poutre longitudinale (222) s'étendant parallèlement au tube absorbeur (108, 208, 908, 1008, 1108) et à l'agencement de miroirs (112, 212, 912, 1012, 1112, sur laquelle la première suspension (323) est montée, et **en ce que** la première suspension (323) est guidée de la poutre longitudinale (222) au tube absorbeur (108, 208, 908, 1008, 1108) à travers les intervalles (436, 936, 1036) entre les premiers et les deuxièmes éléments de miroirs (432, 434, 932, 934, 1032, 1034, 1132, 1134).

13. Système récepteur (104, 204) selon l'une quelconque des revendications 11 à 12, **caractérisé en ce que** la deuxième suspension (324) présente en tant que moyen de compensation une articulation, qui relie la charpente de support (114, 214) sur un côté à l'agencement de miroirs (112, 212, 912, 1012, 1112) ou au moins à des parties de l'agencement de miroirs sur l'autre côté.

14. Système récepteur (104, 204) selon l'une quelconque des revendications 11 à 13, **caractérisé en ce que** la première suspension (323) présente en tant que moyen de compensation un dispositif de palier à roulement ou de palier lisse, en particulier un chariot (326), qui est agencé de façon déplaçable le long de la poutre longitudinale (222).

15. Système récepteur (104, 204) selon l'une quelconque des revendications précédentes, **caractérisé en ce que** le profil courbe de l'agencement de miroirs (112, 212, 912, 1012, 1112) présente deux points culminants supérieurs, dans lequel les ouvertures de ventilation sont disposées respectivement dans la région des deux points culminants.
